# EUROPEAN PATENT APPLICATION

(11) **EP 2 924 630 A1**
(43) Date of publication of application: **30.09.2015**
(21) Application number: 15158200.4
(22) Date of filing: 09.03.2015
(51) Int. Cl.: G06Q 10/10, G05D 23/00

(54) **Computer-implemented system and method for externally evaluating sizing of an indoor climate control system in a building**

(30) Priority: 27.03.2014 US 201414228209
(71) Applicant: Palo Alto Research Center Incorporated, Palo Alto, California 94304 (US)
(72) Inventor: Smullin, Sylvia J., Menlo Park, CA 94025 (US); Apte, Raj, Palo Alto, CA 94306 (US); Ready, Steven E., Los Altos, CA 94024 (US)
(74) Representative: Lord, Michael

(57) **Abstract**

The recommended running time for an indoor climate control system, such as an HVAC system, for a building is determined. Ideally, the recommended running time reflects the amount of time during each operating cycle that the system ought to run for an indoor climate control system that has been properly sized to the building. Energy usage data of an indoor climate control system are obtained for a time period of interest with a time resolution that reflects the physically relevant time scales. The data is formed into a time series of running times. The running times of the system are compared to the recommended running time to infer the apparent sizing of the indoor climate control system.

## Description

### Field

This application relates in general to indoor climate control within a building, and in particular, to a computer-implemented system and method for externally evaluating sizing of an indoor climate control system in a building.

### Background

Systems to control indoor climate are commonly found in residential, commercial, retail, and industrial buildings. Whether in the form of a dedicated cooling- or heating-only system, or a combined heating, ventilation and air conditioning (HVAC) system, indoor climate control systems serve two main purposes. First, these systems help maintain thermal comfort for occupants of a building by heating, cooling, or ventilating air within a structure relative to ambient temperatures and conditions. Second, these systems help to improve air quality through filtration of airborne particulates, provide isolation from outdoor environments, and remove humidity from the air.

The type of indoor climate control system installed in a building is dependent upon several factors, including the building's age and size and the geographic region, which may make indoor climate control of necessity, such as indoor heating in Alaska. The sizing of an indoor climate control system is generally determined in a relatively formulaic fashion, typically through reliance on industry-agreed upon guidelines for calculating the heating or cooling load based on a building's type and the type of proposed indoor climate control system, such as forth in H. Rutkowski, Manual J Residential Load Calculation, Vol. 2 (8th Ed. Nov. 2011) ("Manual J"), and the 2012 ASHRAE Handbook, HVAC Systems and Equipment, SI Ed. (2012) ("ASHRAE Handbook"). Decisions on final system sizing, though, may be strongly influenced by pragmatical non-load-related considerations, such as the cooling or heating capacities of systems available to the installer; the integrity, length and size, routing, and insulative qualities of ductwork; homeowners' lack of understanding of the consequences of oversizing; and a tendency of builders to err on the side of oversizing a system to dissuade post-installation complaints of "insufficient" capacity.

The operation of an indoor climate control system is normally controlled via a thermostat or similar indoor controller that measures indoor temperature and regulates the On- and Off-cycling of the system components to maintain the indoor temperature around the thermostat set point. Typically, each operating cycle includes a time during which the system is running continuously as necessary to bring the building's interior temperature into a temperature range defined about a desired indoor temperature followed by time during which the system is at idle or on standby. The sizing of an indoor climate control system in relation to the load experienced determines the length of time that the system needs to run in each operating cycle to achieve the desired indoor temperature.

The correctness of the sizing of an indoor climate control system is generally not revisited post-installation, except when major building renovations or other significant structural changes to the building are being considered. Indoor climate control system usage contributes significantly to the energy consumption of a building, especially when operated in an inefficient manner, and the sizing of an indoor climate control system strongly affects system efficiency. From the perspective of an energy consumer, properly sizing a system, so that an indoor climate control system runs long enough per operating cycle to be efficient and reduce indoor humidity but not so long as to compromise human comfort in the time required to cool a building, can have a direct effect on the overall cost of energy consumed. Nevertheless, the average residential consumer may lack a sufficient incentive or capability to adjust the size or operation of an existing indoor climate control system to increase system efficiency. On the other hand, while reducing energy consumption remains discretionary for most consumers, power utilities may be under a compulsory mandate to urge consumers to reduce the amount of energy used in an effort to balance an ever-increasing demand for more energy, or lowering consumer energy consumption may simply make good fiscal sense, for example, to help a utility save or defer capital expenditures for building new power generation plants, running transmission lines, and upgrading infrastructure.

Frequently, power utilities urge consumers to reduce energy consumption through educational and compensatory outreach programs, which can include incentives, rewards, advice, outreach, education, and other forms of offerings to the consumers. For example, some power utilities offer rebates to incent consumers to make structural changes, such as switching to compact fluorescent lights or increasing thermal insulation. Problematically, such rebates may not always be awarded to those consumers who would benefit most and may not always incent structural or behavioral changes that will have the most impact on energy savings for each consumer, such as when rebates are offered to all consumers on a first-come, first-served basis.

Consumers who are "energy outliers," that is, consumers who use considerably more energy than neighboring or comparable consumers, are better targets for energy consumption reduction incentives, although they may be unaware of their outlier status or of what changes are needed to help reduce their energy consumption. House energy audits can help consumers to prioritize the changes necessary to become more energy efficient, but energy audits are often costly and they do not account for how human behavior and the operation of the indoor climate control system can vary over time. Moreover, monitoring consumers for reductions in energy consumption after changes have been made is difficult. Energy usage must be measured over long time periods, and weather, behavioral, and structural factors bearing on energy usage must be deconvoluted from the energy usage measurements to correlate energy consumption reduction incentives to realized energy savings. Without visibility into or understanding of all these compounding factors that determine energy usage, the savings accomplished by rebate programs may be calculated as deemed savings, rather than directly measured or assessed.

As used herein, an energy outlier is a consumer who uses more energy for indoor climate control than other comparable consumers, where the comparison may include a normalization for size of house, cooling degree days or heating degree days, the number of occupants in a house, or other information. A consumer that uses more energy for indoor climate control in a house than most others may use more energy for one or more of the following reasons: an extraordinary thermostat set point, malfunctioning or poor placement of the thermostat, malfunctioning of the climate control system due to poor maintenance or other failure, incorrect sizing of the climate control system for the building, poor thermal insulation, large effective leak area between the building and the outdoors, high internal loads due to occupants and appliance usage, or other reasons. Understanding of the relative thermal performance of houses and usage of the indoor climate control system can be used for better targeting and assessing incentive programs related to reduction of energy consumption for indoor climate control. The recipients of incentive programs will generally be the person or entity most directly connected with being able to actually use the form of incentive offered, and not the building or house proper. For example, a homeowner living in his house who is also a customer of a power utility is usually responsible for setting the thermostat in his house. If the house has a very low thermostat set point during a summer cooling season, incenting that customer to change the thermostat set point may be cheaper and more effective than incenting that same customer to blow new insulation into the walls, which he, as a homeowner, could do. In contrast, only the owner of an apartment building would likely be able to make structural changes to the building, rather than any tenants or his property management company, which generally only maintains and repairs, and does not ordinarily replace or upgrade, building indoor climate control systems and structure, like indoor climate control systems or wall insulation, or other capital improvements.

Assessment of the sizing of an indoor climate control system can provide to a power utility information as to why an energy outlier may be an outlier. With that information, the power utility can direct a responsible party to make changes to indoor climate control system operation to make the system run more efficiently. Moreover, the information can be used to monitor the effectiveness of standards or systems used to determine the sizing of indoor climate control systems, so as to improve the mechanisms for future installations.

Therefore, there is a need for an approach to providing an indirect form of estimation and evaluation of post-installation indoor climate control system sizing in a building.

### Summary

The recommended running time for an indoor climate control system, such as an HVAC system, for a building is determined. Ideally, the recommended running time reflects the amount of time during each operating cycle that the system ought to run for an indoor climate control system that has been properly sized to the building. Energy usage data of an indoor climate control system are obtained for a time period of interest with a time resolution that reflects the physically relevant time scales. The data is formed into a time series of running times. The running times of the system are compared to the recommended running time to infer the apparent sizing of the indoor climate control system. In addition, the apparent sizing of the indoor climate control systems for a group of houses can be inferred. The apparent sizing of the indoor climate control systems of the group can be compared and used for targeting communications with homeowners and to assess changes to thermal behavior of house, indoor climate control system, or the thermostat.

One embodiment provides a computer-implemented system and method for externally evaluating sizing of an indoor climate control system in a building. A recommended running time for an indoor climate control system based on a building's type and type of indoor climate control system is obtained. A usage time series that reflects the indoor climate control system usage over a plurality of operating cycles is obtained. Each operating cycle includes a "go-to-idle" state transition during which the indoor climate control system transitions from a running state to an at idle state and a "go-to-run" state transition during which the indoor climate control system transitions from an at idle state to a running state. The indoor climate control system runs for a period of running time between each "go-to-run" state transition and the next "go-to-idle" state transition, the indoor climate control system remaining at idle for a period of idle time between each "go-to-idle" state transition and the next "go-to-run" state transition. The running time is the time necessary to bring the building's interior temperature into a temperature range defined about a desired indoor temperature for the building. A time series of running times for the indoor climate control system from the usage time series is extracted. An apparent sizing of the indoor climate control system is determined by comparing the running times time series to the recommended running time.

The foregoing approach fundamentally gets at *why* one building might be using more energy for indoor climate control system usage than others by narrowing the set of possible reasons and showing which of the buildings might have incorrectly sized indoor climate control systems. The comparison between houses of the apparent sizing of their respective indoor climate control systems could be used in conjunction with other comparisons of thermal performance of house or occupant behavior to determine which houses would most likely benefit from what incentives being provided to their owner, occupant, or responsible party. If a power utility wants to offer rebates or incentives to the owner, occupant, or responsible party to reduce energy consumption for indoor climate control in a building that has an oversized indoor climate control system, the utility might, for example, choose to first incent the owner, occupant, or responsible party of the building to make a change in the operating parameters of the indoor climate control system to increase its running time and thereby increase the system's efficiency without changing other parameters.

In addition to being used to select which owner, occupant, or responsible party of a house to receive a particular incentive, the foregoing approach could further be used as part of a study of a group of houses, including identifying the top reasons why one house uses more energy than others and choosing the best incentives for the owner, occupant, or responsible party of that house. If a power utility wants to offer an incentive to the owner, occupant, or responsible party of one house to make some behavioral or structural change, the foregoing approach could be used to choose what kind of behavioral or structural change to incent for that one house by way of their owner, occupant, or responsible party.

The foregoing approach could be used to monitor the impact of any energy efficiency program by making the same comparison before and after any incentive program to the owner, occupant, or responsible party of a building has been implemented.

Finally, the foregoing analysis could be used to monitor the processes by which the sizing of indoor climate control systems is determined before installation, including the codes, standards, methods, and implementation of those codes, standards, and methods. If indoor climate control systems are found to be oversized, even when proper protocol is followed before installation, these data can be used to appropriately modify the protocols.

Still other embodiments of the present invention will become readily apparent to those skilled in the art from the following detailed description, wherein is described embodiments of the invention by way of illustrating the best mode contemplated for carrying out the invention. As will be realized, the invention is capable of other and different embodiments and its several details are capable of modifications in various obvious respects, all without departing from the spirit and the scope of the present invention. Accordingly, the drawings and detailed description are to be regarded as illustrative in nature and not as restrictive.

### Brief Description of the Drawings

FIGURE 1 is a functional block diagram showing factors affecting the operation of an indoor climate control system in a house.
FIGURES 2 and 3 are graphs respectively showing, by way of examples, cooling power and heating power as functions of indoor temperature.
FIGURE 4 is a flow diagram showing a computer-implemented method for externally evaluating sizing of an indoor climate control system in a building in accordance with one embodiment.
FIGURE 5 is a process flow diagram showing a routine for making comparisons to the recommended running time for use in the method of FIGURE 4.
FIGURE 6 is a block diagram showing a computer-implemented system for externally evaluating sizing of an indoor climate control system in a building in accordance with one embodiment.

### Detailed Description

An "energy outlier" is a consumer of a power utility who uses considerably more energy for indoor climate control system operation than neighboring or comparable consumers under similar ambient temperatures and conditions. There are many reasons why a consumer may be an energy outlier for indoor climate control system usage. For air conditioning, the reasons may be due to an oversized air conditioner that runs for extremely short, inefficient periods of time; an overly-high internal thermal load due to high occupancy, lots of cooking activity, or large numbers of appliances turned on; a leaky house due to poor insulation; or some other reason.

Understanding why energy outliers are outliers can help a power utility in deciding which incentives or education to offer to what customers. Power utilities in the residential energy market lack sufficient tools for designing rebate or other incentive offerings and verifying the impact of such rebates or incentives on energy consumption. The discussion that follows provides a power utility with a set of tools that can be used to identify and narrow the set of reasons underlying why a consumer is an energy outlier, so as to help choose energy consumption reduction incentives to offer to encourage structural or behavioral changes. For example, does the house of an energy outlier have poor insulation? Lots of unshaded windows? An extraordinary thermostat set point? An improperly-sized indoor climate control system that is oversized based on the building's type and type of indoor climate control system? A detailed energy audit can answer some of these questions. Here, the goal is to deduce what is possible with a limited set of information about the house, specifically, energy usage data that indicates when the indoor climate control system is running or at idle (or on standby), that is, cycling On and Off, and weather information for the same time period as the energy usage data.

These same tools can be used to choose those customers of a power utility to whom to offer a particular incentive by narrowing the set of customers that are most likely to receive maximal energy consumption reduction benefit from the incented change. Much of the discussion is presented in the context of energy use for cooling with air conditioning; however, except as specifically related to humidity, the discussion can equally be applied *mutatis mutandis* to energy use for heating or other forms of indoor climate control that involve the use of a thermostat or other temperature-based control system.

Energy usage is directly related to the running time of an indoor climate control system. In turn, running time and efficient operation are related through thermostat set point, system sizing, thermostat set point adjustment, and other factors. Knowledge of an indoor temperature is crucial for understanding a building's energy use for indoor climate control; such understanding is a key determinant of the amount of heat that needs to be added by a heater or removed by an air conditioner. An effective thermostat set point, as a surrogate of indoor temperature, can be externally inferred based on system usage and ambient temperature data, such as described in commonly-assigned U.S. Patent application, entitled "Computer-Implemented System and Method for Externally Inferring an Effective Indoor Temperature in a Building," Serial No. 14/228207, filed March 27, 2014, Docket No. 20131644US01, pending, the disclosure of which is incorporated by reference. In addition, the efficiency contributions of an appropriate thermostat set point, proper system sizing, and other factors can be negated through inefficient indoor climate control system usage; regular adjustment of thermostat set point in response to actual thermal comfort need can significantly contribute to efficient indoor climate control system operation. Patterns of thermostat set point adjustment can also be externally inferred, such as described in commonly-assigned U.S. Patent application, entitled "Computer-Implemented System and Method for Externally Evaluating Thermostat Adjustment Patterns of an Indoor Climate Control System in a Building," Serial No. 14/228211, filed March 27, 2014, Docket No. 20131646US01, pending, the disclosure of which is incorporated by reference.

Industry standards, such as described in Manual J and the ASHRAE Handbook, cited *supra*, define sizing in terms of loads due to infiltration of ambient air into a building, internal loads due to occupants and from the operation of machinery and appliances, loads from insolation on the building envelope and through fenestration, and other sources. The sizing calculations are meant to provide one technique for choosing suitably-sized indoor climate control system equipment for a building, which can have long ranging affects. For instance, in a climate with a long and hot cooling season, the air conditioner in a house can be the largest determinant of overall electricity usage for a consumer. If the consumer makes behavioral or structural changes to reduce the energy used for air conditioning, the consumer can save money. Additionally, the consumer's power utility, as well as the community at large, can benefit from a reduction in energy demand during peak times on hot summer days, and the power utility can benefit by better meeting legislative requirements or other mandates or incentives for reducing energy consumption. Everyone can benefit from reduced energy consumption, which can reduce greenhouse gas emissions from power plants.

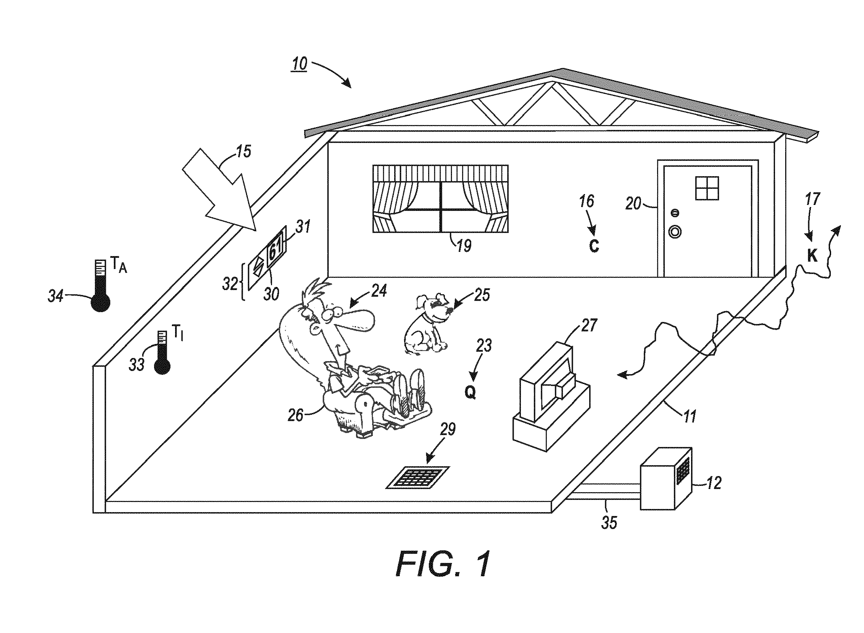

An indoor climate control system may run less efficiently upon being turned on, and thus the overall efficiency will be greater when the running times are longer and the system cycles fewer times. Indoor climate control system usage is influenced by several factors, which plays into system sizing and, in turn, dictates whether the system operates efficiently. FIGURE 1 is a functional block diagram showing factors 10 affecting the operation of an indoor climate control system 12 in a house 11. Although described herein with specific reference to a house 11, the same or similar factors affect the operation of other types of buildings, including commercial, industrial, and so forth, except as otherwise noted.

Effective indoor temperature 33, as reflected by a thermostat set point (*T*₀) 31, is one factor affecting system running time and, therefore, the amount of energy used for indoor climate control, particularly during the cooling and heating seasons, which can also provide an explanation as to why some houses may use more energy for indoor climate control than their neighbors, peers, or comparable customers. Herein, the terms neighbors, peers, and comparable customers can be used interchangeably.

For purposes of discussion, the sizing of an indoor climate control system is determined by the aggregate climate controlling, that is, heating or cooling, contributions of the individual components that make up the system. Each component that functionally contributes to the climate controlling capabilities of a system form one part of the system's overall sizing. Cooling is generally provided by air conditioning units, which typically include a compressor, an evaporator, a condenser, and a blower, although the sizing of an air conditioning unit is ordinarily defined in the aggregate based on measures of total cooling power and the fraction of cooling power that is latent cooling. Heating can be provided by a wider range of sources, including a fireplace, convective heaters, radiant heaters ("radiators"), and furnaces, which typically include a burner or heating element that runs on oil, gas, or electricity, a heat exchanger, and a blower. The sizing of a furnace is ordinarily defined in the aggregate based on heating power. The heating or cooling power of an indoor climate control system may vary with indoor and outdoor temperature, humidity, load, or other conditions, and typically industry ratings are based on testing under a specific set of conditions. Heat pumps can often provide both cooling and heating and the sizing determination must take into account both functions.

Sizing generally applies only to those indoor climate control systems that are installed as part of a building's infrastructure. Portable indoor climate control units, like space heaters and window air conditioners, are usually added to a building as a *post facto* solution to inadequate installed indoor climate control. Ductwork includes ducts 35, dampers (not shown), and registers 29 through which conditioned air is distributed from a system's blower into the interior of a house 11. Ductwork 35 must be sized for both the type of building and type of indoor climate control system. The integrity; length and size; routing, for instance, within the walls, under the floors, and overhead; and insulative qualities of ductwork can affect the ability of the indoor climate control system 12 to operate efficiently. Leaky ducts, for instance, increase the load on the system through wasted capacity, while a smaller duct volumetrically delivers less conditioned air per minute than a larger vent for the same blower speed. Some installed indoor climate control systems 12 are ductless and utilize an air exchanger that pulls air directly into the system from a room before returning conditioned air back into the room via the blower. Other types of heating and cooling indoor climate control systems and components are possible.

Operation of the indoor climate control system 12 is assumed to be controllable via a thermostat 30, or similar indoor controller that measures indoor temperature, which provides a temperature controlling component to the indoor climate control system 12, and regulates the On- and Off-cycling of the system components between running and at idle (or on standby) to maintain the indoor temperature around the thermostat set point 31. The thermostat 30 is not a component that factors into sizing, although the thermostat 30 will influence efficiency based on the running time necessary to bring the building's interior temperature 33 into a temperature range defined about or around the thermostat set point 31. The thermostat set point 31 can be manually adjusted using controls 32 provided with the thermostat 30, automatically adjusted by a thermostat that learns occupant behavior, can be set to change on a timer, or could respond to other conditions, such as indoor humidity or occupancy. Other thermostat set point 31 modes of adjustment or operation are possible.

Data showing usage of an indoor climate control system must be available for the house 11, specifically the times at which the system is running and at idle or on standby. Data showing the actual power used by an indoor climate control system, though, is not essential and may be of secondary consideration.

Information about indoor climate control system usage must be separated from other energy usage in a house. For the inference of effective indoor temperature described herein, only the time that an air conditioner is running and has gone to idle or standby, rather than the total energy draw, needs to be considered. For an air conditioner, which is generally expected to have cooling power and coefficient of performance (COP) that vary with outdoor temperature, this usage time series may have different trends than the power or total energy draw that is commonly used in other analyses; for an electric resistive heater, the amount of energy drawn is expected to be close to directly proportional to the time that the heater is turned on. System usage data can be derived from various sources. For instance, many power utilities are currently installing "smart" power meters that monitor energy usage at 1-hour or 15-minute time resolutions. Monitoring at still higher time resolutions, such as at one-minute intervals, can be one way of indirectly determining when an air conditioner runs and goes to idle or standby in a house 11 over the course of a cooling season, particularly as cycles of air conditioners in houses are often on the order of 5-20 minutes in duration, provided a disaggregation algorithm is applied to the meter data to separate-out air conditioning usage. Smart meters and disaggregation algorithms can provide new data streams to power utilities and other users, enabling tools, such as described herein. Still other sources of indoor climate control system usage data are possible, including a meter that monitors the electrical current to an air conditioning circuit alone, a sensor that monitors air flow in the duct work, a sensor that measures the vibration of the air conditioning when running, and usage reported by smart thermostats. The total amount of electricity, gas, or other fuel used over a period of time for an indoor climate control system can also be used as a proxy for the fraction of time that a system is running, even if usage is not monitored with a time resolution that is high enough to distinguish the exact minute during which the climate control system cycles runs or goes to idle or standby. The fidelity of this approximation depends on how much the efficiency of the indoor climate control system varies with ambient temperature and the time resolution at which fuel use is monitored.

Throughout the day, several factors 10 can affect the operation of an indoor climate control system 12. These factors include the heat capacity C (16) of the house 11, the thermal conductance K (17) of the house 11 between the interior and the exterior, an interior heat load *Qᵢₙ* (23) generated within the house 11, and a non-temperature-driven heat load *Qₒᵤₜ* from outside the house 15. Sources of heat load *Qᵢₙ* include the heat generated by people 24, pets 25, furnishings 26, and operating appliances 27 located in the house 11, which can cause the heat load *Qᵢₙ* to continually change. External heat loads that are not related to the temperature difference between indoors and outdoors include the latent load due to infiltration. Loads due to radiation from the sun and radiative coupling to the environment may be included in either *Qₒᵤₜ* or may be coupled into the term proportional to the temperature difference. Radiation may also be incorporated into the model, using knowledge or assumptions about the building type, structure, and location, by using the sol-air temperature as the ambient temperature, instead of the outdoor dry bulb temperature, such as described in the 2013 ASHRAE Handbook, Fundamentals, SI Ed. (2013).

In addition, in the case of air conditioning, ambient temperature that is higher than the indoor temperature creates a load via thermal conduction from outside to inside. In the case of heating, ambient temperatures that is lower than the desired indoor temperature is of importance. The ambient temperature also creates a load via infiltration when leaks in the house, ventilation systems, open doors or windows, or chimneys allow outdoor air to come inside a house. Radiation between the surroundings, including the ground, the sky, and the entirety of the outdoor environment, also create a means for heat exchange between the outdoors and the building envelope, with further heat exchange between the building envelope and the indoor air determining the load on the interior of the house.

In the simplified model described herein, the effective thermal conductance *K* can encompass all temperature-dependent sensible heat transfer between the indoor and outdoor environment through the building envelope due to conduction, infiltration, convection, and radiation, which, in some cases, may be appropriately linearized. The thermal conductance *K* determines the temperature-dependent heat transfer between the interior of the house 11 at temperature *T* (33) and the ambient temperature outside of the house *T_{A}* (34). In this model, there is no spatial variation of *T* or *T_{A},* and no explicit convective or radiative heat transfer. More generally, *K* can be considered to be an overall heat loss coefficient that reflects properties of the building envelope.

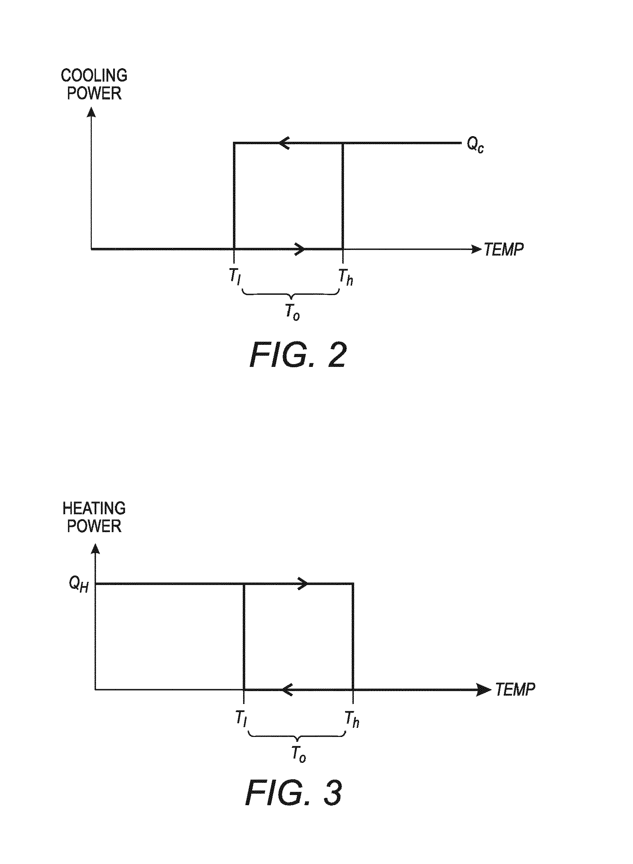

In the model, the thermostat 30 of the house 11 is set to maintain the interior temperature 33 at *T* = *T*₀, where *T*₀ is the set point chosen for the thermostat 30. The thermostat 30 operates using a "deadband." FIGURES 2 and 3 are graphs respectively showing, by way of examples, cooling power (for air conditioning) and heating power (for heating) as functions of indoor temperature. For simplicity, any variations in system cooling power or heating power with temperature are ignored in the graphs, which are intended to convey a simple version of a thermostat control scheme. To avoid constant cycling between running and at idle (or on standby) modes, most thermostats operate using a "deadband" that begins at a temperature *Tₗ* slightly below and ends at a temperature *Tₕ* slightly above the thermostat set point *T*₀. An indoor climate control system will start running when the indoor temperature falls below the deadband (for heating) or rises above the deadband (for cooling). Obversely, the system will go to idle or standby when the indoor temperature rises above the deadband (for heating) or falls below the deadband (for cooling). Though indoor climate control systems may have control schemes that are more complicated, this deadband model captures the most important features of thermostat operation.

Referring back to FIGURE 1, more precisely, an air conditioning system will start running when *T* ≥ *Tₕ* = *T*₀ + *dTₕ* and will go to idle or standby when the AC when *T* ≤ *Tₗ* = *T*₀ - *dTₗ* where *dTₕ* and *dTₗ* are upper and lower offsets that define the deadband of the thermostat 30, and *T*₀ is the thermostat set point. In an indoor climate control system, this deadband may be set in the thermostat alone, in some other component of the system, or by a combination of settings in the thermostat and one or more other components of the system. This behavior may also be called *hysteresis* in the system, and, in this context, the deadband may also be called a *hysteresis band* or the tolerance of a thermostat. The mechanical device that accomplishes this effect may be, for example, an anticipator in an analog thermostat or a control built into a microprocessor in a digital thermostat.

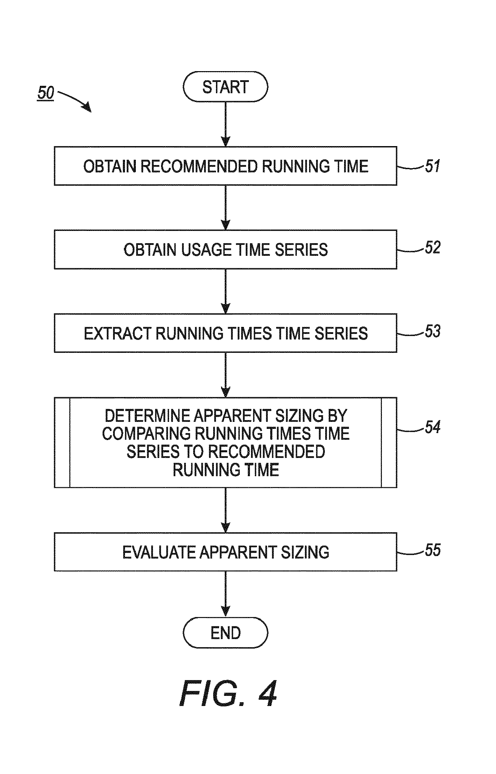

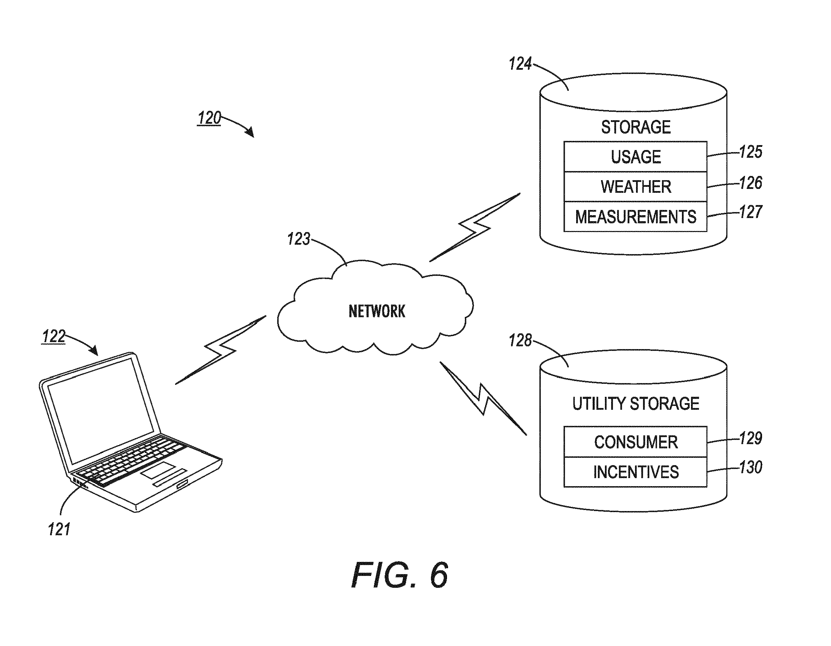

The duration of the running time of an air conditioner depends on its cooling power, the sum of the loads, the thermal properties of the building, and the size of the deadband. The sizing of the indoor climate control system refers to the comparison of the cooling power (for an air conditioner) or the heating power (for a heater) in relationship to the loads experienced. Subject to the foregoing considerations, the apparent sizing of an indoor climate control system can be inferred. Here, the apparent sizing includes the power of the indoor climate control system in relationship to the load and the deadband. FIGURE 4 is a flow diagram showing a computer-implemented method 50 for externally evaluating sizing of an indoor climate control system in a building in accordance with one embodiment. The method is performed as a series of process or method steps performed by, for instance, a general purpose programmed computer, such as further described *infra* with reference to FIGURE 6.

Only a limited set of information about the building is needed to externally infer the apparent sizing. First, a recommended running time must be obtained (Step 51). This recommended running time could be one figure, such as, for air conditioning, a running time that is equal to the 15 minutes typically required to achieve efficient operation, or the recommended running time could encompass a range. For instance, air conditioners are generally sized to run for more than 15 minutes per operating cycle, as air conditioners are generally more efficient when run with longer operating cycles that permit the system components to reach a stable operating state, which generally takes about 15 minutes to achieve. In addition, industry practices and guidelines could be consulted for recommended running times. Oversized air conditioners are inefficient by virtue of often being run for only short periods of time. In addition, short running times mean that air is insufficiently dehumidified, which can lead to condensation and mold in or on the ducts. Air conditioning should ideally be sized to run constantly only when the heaviest loads are experienced, which is only expected to occur infrequently and on the hottest days of the year. On cooler days or when there is less load, if an air conditioner runs for more than, for example, an hour or more per operating cycle or runs constantly, the air conditioner may be undersized for the house and the loads that the air conditioner experiences. If an air conditioner is undersized, the air conditioner may not cool enough to maintain human comfort.

Next, a time series of indoor climate control system usage data, which reflects usage of the system in the building over several operating cycles, is obtained (Step 52). The data in the usage time series can be expressed as binary indications of whether the indoor climate control system is running or at idle at any given time. Preferably, the time series includes enough data for study over a long enough period of time to include the natural variations in ambient temperature and indoor climate control system running conditions as needed to make a sound analysis. A time series data of running times for the indoor climate control system 12 is extracted from the usage time series (Step 53).

The usage time series data can be processed in operating cycles with each operating cycle characterized by a duty cycle. For each operating cycle, a duty cycle is the ratio of the time that the system is running to the total time of the operating cycle. A cycle is defined as a window of time during which the indoor climate control system undergoes two discrete state transitions, a "go-to-idle" state transition during which the system transitions from a running state to an at idle or on standby state, and a "go-to-run" state transition during which the indoor climate control system transitions from an at idle or on standby state to a running state. The indoor climate control system runs for a period of time between each "go-to-run" state transition and the next "go-to-idle" state transition, and the indoor climate control system remains at idle or on standby for a period of idle time between each "go-to-idle" state transition and the next "go-to-run" state transition. The ambient temperature at which an air conditioner first starts running suffers from a delay between the time that ambient temperature changes and the time that the load is experienced by the air conditioner. The system runs for the time necessary to bring the building's interior temperature into a temperature range defined about or around a desired indoor temperature for the building. The window of time can be shifted forward or backward, such that an operating cycle begins while the system is running, then transitions to at idle or on standby, and subsequently starts running again, or while the system is at idle or on standby, transitions to running, and subsequently goes to idle or on standby again, so long as the shifting of the window of time is consistent for all operating cycles.

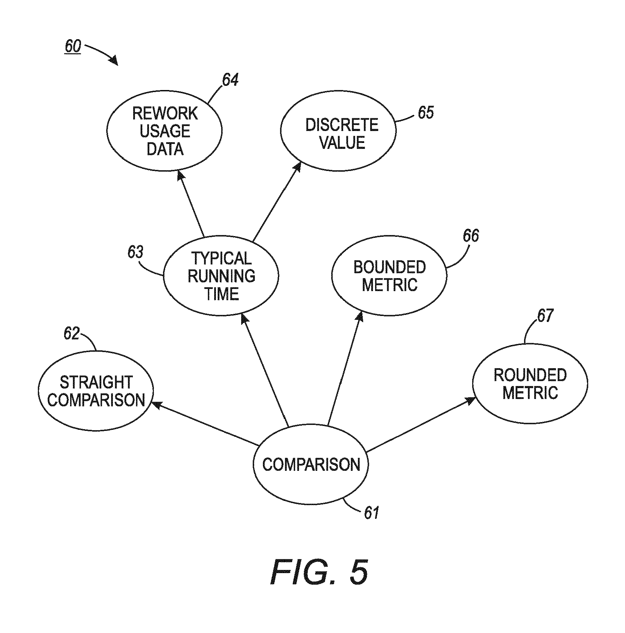

The apparent sizing of the indoor climate control system 12 is determined (Step 54) by comparing the running times time series to the recommended running time. FIGURE 5 is a process flow diagram showing a routine 60 for making comparisons to the recommended running time for use in the method 50 of FIGURE 4. The comparison can be performed in several ways (Step 61). The comparison alone may suffice for concluding that the indoor climate control system is appropriately-sized, or is under- or oversized (Step 62). For instance, the difference between the running times time series and the recommended running time may be such that sizing is fairly implied by the disparity of the numbers. A *de minimus* difference, that is, a near-zero disparity, means that the indoor climate control system is likely sized correctly. A system that runs almost constantly under conditions in which the recommended running time is of average duration could be seen as undersized. Conversely, a system that runs for only one- or two-minute intervals under the same conditions could be seen as oversized. More detailed analyses of sizing are possible.

For instance, a typical running time can be determined, based on the running times time series, and compared to the recommended running time (Step 63). A typical running time that is close (or equal) to the recommended running time is likely sized correctly. This recommended running time could be one figure, such as, for air conditioning, a running time that is the 15 minutes typically required to achieve efficient operation, or the recommended running time could encompass a range, as explained *supra.* If the typical running time is less than or equal to the recommended running time, the apparent sizing of the indoor climate control system is oversized for the building. Conversely, if the typical running time is more than or equal to the recommended running time, the apparent sizing is undersized.

The typical running time can be found in several ways. First, the usage time series can be reworked (Step 64). For example, the running time of select operating cycles in the usage time series can be rounded, either up or down, to a different unit of time than used in the usage time series, such as three-minute intervals from a one-minute time resolution. Long operating cycles, short operating cycles, or a combination of both can also be removed from the usage time series. As well, only select operating cycles can be retained in the usage time series based on a pre-defined selection criteria that may be related to ambient conditions, quality of data, or any other information. Last, operating cycles for only select hours days, weeks, months, times of the year, or time periods can be retained, which can be useful, for example, when there is interest in studying operation outside of the hottest days of the year or when considering operation during times when there is no indication of sharp changes in the system load due, for instance, to changes in thermostat set point. Still other ways of determining typical running time based on the usage time series are possible.

Alternatively, a discrete value can be selected to represent the typical running time (Step 65). For example, the running times in the running times time series can be ranked, then the running time that is at a fixed percentile in the ranked running times time series can be selected as the typical running time. In addition, the maximum or minimum running time during a fixed period of time in the running times time series can be chosen as the typical running time. Finally, a mode or other statistical measure of the running times during a fixed period of time in the running times time series can be evaluated and used as the typical running time. Still other ways of determining typical running time as a discrete value are possible.

In lieu of using a typical running time, a subset of the running times time series can be examined, such as by identifying those running times in the running times time series that are more than or equal to an upper bound on the recommended running time, or that are less than or equal to a lower bound on the recommended running time (Step 66). This option makes the most sense when the recommended running time covers a range of running times. A running time metric can be established as a fraction of the number of identified running times occurring in the subset over the total number of running times in the running times time series, such that 0 ≤ *metric* ≤ 1. Other fractional, proportional, or ratio scales are possible. The apparent sizing of the indoor climate control system can then be characterized based on the running time metric. Where an upper bound on the recommended running time is used, a running time metric that falls intermediate to 0 and 1, that is, around ½, is likely sized correctly. If the running time metric is significantly less than 1 or equal to 0, the apparent sizing of the indoor climate control system is oversized for the building. Conversely, if the typical running time is near or equal to 1, the apparent sizing is undersized. Where a lower bound on the recommended running time is used, a running time metric that falls intermediate to 0 and 1, that is, around ½, is also likely sized correctly. If the running time metric based on an upper bound of the recommended running time is near or equal to 1, the apparent sizing is undersized. If the running time metric based on a lower bound of the recommended running time is near or equal to 1, the apparent sizing is oversized.

The running time metric can also be defined by identifying those running times in the running times time series that are substantially equal to the recommended running time, then finding the fraction of the number of identified running times occurring in the subset over the total number of running times in the running times time series, such that 0 ≤ *metric* ≤ 1. This option makes the most sense in cases where there is one exact, fixed recommended running time and when the running times are rounded (Step 67) to a fixed time base for comparison to the recommended running time. Other fractional, proportional, or ratio scales are possible. The apparent sizing of the indoor climate control system can then be characterized based on the running time metric. A running time metric that falls intermediate to 0 and 1, that is, around ½, is likely sized correctly. If the running time metric is significantly less than 1 or equal to 0, the indoor climate control system is not appropriately sized for the building. Still other determinations of the apparent sizing of the indoor climate control system are possible.

Finally, referring back to FIGURE 4, the apparent sizing can be evaluated (Step 55). One type of evaluation is deciding what can be done with the apparent sizing determination. The correctness of the sizing of an indoor climate control system is generally not revisited post-installation, except when major building renovations or other significant structural changes to the building are being considered. As a result, expecting a customer to begin considering significant structural changes in response to a finding of a potentially incorrectly sized indoor climate control system may be impracticable and possibly unnecessary. For instance, one or more of the system's operating parameters could be modified to compensate for incorrect sizing. The desired indoor temperature is indicated by the thermostat set point *T*₀, but the thermostat limits the operation of the indoor climate control system to only those periods of time that the indoor temperature *T* falls with the temperature range of the deadband, that is, between a lower temperature *Tₗ* slightly below and an upper temperature *Tₕ* slightly above the thermostat set point *T*₀. Widening the size of the deadband, by increasing one or both the lower temperature offset *dTₗ* = *T*₀ - *Tₗ* and the upper temperature offset *dTₕ* = *Tₕ* - *T*₀ would cause an indoor climate control system to run for longer periods of time (if no other conditions change), which presents one solution to an oversized system that runs for inefficiently short periods of time. Similarly, narrowing the size of the deadband, by decreasing one or both the lower temperature offset and the upper temperature offset (if no other conditions change). In the situation where an apparently undersized system is actually sized appropriately and has a deadband that is too large, so that the thermostat set point is reached in a reasonable amount of time and the temperature is allowed to vary too much for human comfort, narrowing the deadband can increase human comfort by reducing the range of temperature variation during each operating cycle. The effectiveness of the modification of the operating parameters can be weighed by re-determining the apparent sizing post-operating parameters modification, and comparing "before" and "after" apparent sizings. A comparison of energy use before and after a modification can also assess the impact of such a modification.

Another type of evaluation is with respect to providing energy consumption reduction incentives. Thus, an appropriate type of incentive can be chosen with respect to incenting a customer to modify their indoor climate control system's operating parameters. As before, the effectiveness of the modification, and therefore the effectiveness of the incentive, can be weighed by re-determining the apparent sizing post-operating parameters modification, and comparing "before" and "after" apparent sizings.

In a broader sense, the findings of apparent sizing can be used to distinguish among a group of utility customers to compare the apparent sizing of their respective indoor climate control systems, and, if appropriate, determine which ones should be targeted for certain interactions. If a power utility is offering rebates, incentives, or education to the owner, occupant, or responsible party of a house related to purchasing or adjusting indoor climate control systems, those opportunities might be offered first to those customers having indoor climate control systems further from being properly sized. When unhappy or dissatisfied customers ask a power utility for customer support regarding an air conditioner that is not properly dehumidifying a house or not keeping a house cool enough, the apparent sizing can help the customer support agent better advise the customer of possible solutions, including adjustment of a deadband or a purchase of a more appropriately-sized system.

For example, energy usage data for the indoor climate control systems of the group could be obtained and compared. A customer within the group that uses a lot of energy for air conditioning can be evaluated to assess whether the customer's air conditioner is appropriately sized. Comparisons can be made based on indirect information, and based on these comparisons, a power utility is better able to target rebate and incentive programs. A power utility can also monitor the impacts of energy efficiency programs. The comparison can be used, for instance, to better understand why one or more of the buildings use more energy for indoor climate control than other buildings and to help narrow the set of likely reasons for excessive energy consumption.

The power utility can also use the comparison of apparent sizings to choose which recommendations to make to building owners, occupants, or managers for reducing energy consumption. In addition, the findings can be used by third parties who want to advertise or offer products and services for reducing energy consumption or optimizing or changing indoor climate control to building owners, occupants, managers, or responsible parties. For example, a company that makes thermostats that are designed to encourage responsible setting of the thermostat set point or modifying the deadband by widening or narrowing the temperature range might want to market the thermostat to customers with improperly sized systems. As well, a contractor that installs or a company that sells new air conditioning systems may want to offer services first to homeowners who have inappropriately-sized systems. Other uses of the comparison are possible.

The apparent sizing can also be used as an assessment of the system for choosing the appropriate indoor climate control system for a building. For instance, the skill used in determining the sizing of the indoor climate control system for a building of the known specification can be assessed in light of the apparent sizing of the system. Similarly, assumptions based on building codes, indoor climate control system standards, and so forth as used in making determinations of the sizing of indoor climate control systems can be tested. If correct procedures are followed and a system still is apparently oversized, the procedures may have some erroneous assumptions. If all systems installed by one contractor are oversized, the contractor may be incorrectly following procedures. Still other uses of the apparent sizing of an indoor climate control system are possible.

The foregoing methodology, as described *supra* with reference to FIGURES 4 and 5, can be performed by one or more computers operating independently or over a network. FIGURE 6 is a block diagram showing a computer-implemented system 120 for externally evaluating sizing of an indoor climate control system in a building in accordance with one embodiment. The methodology can be implemented as a computer program 122 for execution by a personal computer 121 or similar computational device, which include components conventionally found in general purpose programmable computing devices, such as a central processing unit, memory, input/output ports, network interfaces, and nonvolatile storage, although other components are possible.

The personal computer 121 can either operate stand-alone or be interconnected over a network 123, which could be a local area network, enterprise network, or wide area network, including the Internet, or some combination thereof. The personal computer 121 can include a storage device (not shown) or storage 124 can be provided over the network 123. The storage is used to store the energy usage data 125, weather information 126, and, if available, measurements 127 of actual building data, such as indoor temperature. In addition, a power utility (not shown) may maintain a storage device 128 to track their customers 129 and incentives 130. Other data can also be stored.

While the invention has been particularly shown and described as referenced to the embodiments thereof, those skilled in the art will understand that the foregoing and other changes in form and detail may be made therein without departing from the spirit and scope of the invention.

## Claims

1. A computer-implemented method for externally evaluating sizing of an indoor climate control system in a building, comprising the steps of:
obtaining a recommended running time for an indoor climate control system based on a building's type and type of indoor climate control system;
obtaining a usage time series that reflects the indoor climate control system's usage over a plurality of operating cycles, each operating cycle comprising a "go-to-idle" state transition during which the indoor climate control system transitions from a running state to an at idle state and a "go-to-run" state transition during which the indoor climate control system transitions from an at idle state to a running state, the indoor climate control system running for a period of running time between each "go-to-run" state transition and the next "go-to-idle" state transition, the indoor climate control system remaining at idle for a period of idle time between each "go-to-idle" state transition and the next "go-to-run" state transition, the running time comprising the time necessary to bring the building's interior temperature into a temperature range defined about a desired indoor temperature for the building;
extracting a time series of running times for the indoor climate control system from the usage time series; and
determining an apparent sizing of the indoor climate control system by comparing the running times time series to the recommended running time,
wherein the steps are performed on a suitably-programmed computer.

2. A method according to Claim 1, further comprising the step of:
defining the usage time series as binary indications of whether the indoor climate control system is running or at idle at any given time.

3. A method according to Claim 1, further comprising one of the steps of:
concluding that the apparent sizing of the indoor climate control system is oversized for the building;
concluding that the apparent sizing of the indoor climate control system is undersized for the building; and
concluding that the apparent sizing of the indoor climate control system is neither undersized nor oversized for the building.

4. A method according to Claim 1, further comprising the steps of:
defining a typical running time based on the running times time series; and
characterizing the apparent sizing of the indoor climate control system based on the typical running time, comprising one of the steps of:
concluding that the apparent sizing of the indoor climate control system is oversized for the building if the typical running time is less than or equal to the recommended running time;
concluding that the apparent sizing of the indoor climate control system is undersized for the building if the typical running time is more than or equal to the recommended running time; and
concluding that the apparent sizing of the indoor climate control system is neither undersized nor oversized for the building if the typical running time is substantially close to the recommended running time.

5. A method according to Claim 4, further comprising at least one of the steps of:
rounding the running time of select operating cycles in the usage time series to a different unit of time than used in the usage time series, prior to defining the typical running time;
removing at least one of long operating cycles and short operating cycles from the usage time series, prior to defining the typical running time;
retaining only select operating cycles in the usage time series, prior to defining the typical running time; and
retaining operating cycles in the usage time series for only select hours days, weeks, months, times of the year, or time periods, prior to defining the typical running time.

6. A method according to Claim 1, further comprising the step of:
adjusting operating parameters of the indoor climate control system to modify operation of the indoor climate control system when running.

7. A method according to Claim 6, wherein one of the operating parameters adjusted comprises the temperature range defined about the desired indoor temperature, further comprising the steps of:
defining the temperature range around the desired indoor temperature to which a thermostat comprised in the indoor climate control system controls the temperature in the building as a deadband comprising a lower offset that defines a temperature slightly below the desired indoor temperature and an upper offset that defines a temperature slightly above the desired indoor temperature; and
adjusting the deadband when the indoor climate control system is concluded to be oversized.

8. A method according to Claim 7, further comprising at least one of the steps of:
increasing the lower offset of the deadband;
increasing the upper offset of the deadband;
decreasing the lower offset of the deadband; and
decreasing the upper offset of the deadband.

9. A method according to Claim 6, further comprising the steps of:
re-determining the apparent sizing of the indoor climate control system subsequent to the adjusting of the operating parameters; and
comparing the apparent sizing of the indoor climate control system as determined and the apparent sizing of the indoor climate control system as re-determined.

10. A method according to Claim 6, further comprising the step of:
choosing an energy consumption reduction offering with respect to the adjusting of the operating parameters.
